# EUROPEAN PATENT APPLICATION

(11) **EP 1 453 234 A2**
(43) Date of publication of application: **01.09.2004**
(21) Application number: 04004331.7
(22) Date of filing: 26.02.2004
(51) Int. Cl.: H04J 14/02

(54) **An optical communication system and method**

(30) Priority: 27.02.2003 IL 15464803; 28.05.2003 IL 15617703
(71) Applicant: ECI Telecom Ltd., 49517 Petach Tikva (IL)
(72) Inventor: Mantin, Sharon, Ramat-Aviv Tel-Aviv 69050 (IL); Nahumi, Dror, Ocean N.J. 07712 (US); Sourani, Sason, Hod Hasharon 45267 (IL); Ben-David, Moshe, Tel-Aviv 69391 (IL); Inbar, Hanna, Hod-Hasharon 45352 (IL); Segev, Aharon, Ganel Tikva 55900 (IL)
(74) Representative: Modiano, Guido, Dr.-Ing.

(57) **Abstract**

Dividing a multiplexed optical signal transmitted along a first transmission path into two portions and diverting one of the two portions to a second transmission path and forwarding the other portion of the multiplexed optical signal along that first transmission path, while the energy of the diverted portion comprises the entire spectrum of the multiplexed optical signal. Preferably, the diverted first portion is further divided into at least two parts, each comprising a wavelength range substantially different than the others, and at least one of the two parts is forwarded towards an optical receiver.

## Description

### Field of the Invention

The present invention relates to optical communication networks using wave division multiplexing.

### Background of the Invention

In the last years many optical networks have been deployed mainly in the long haul and metro areas. Many of these networks are based on Dense Wavelength Division Multiplexing ("DWDM"), a method that enables transmission of several optical channels over a single fiber. Each of these optical channels is transmitted at a different wavelength and the signals each being at a different wavelength, are multiplexed and transmitted over one fiber. At a destination point, the selected wavelengths that are associated with the desired optical channels are detected and separated from the remaining multiplexed signals. In typical networks, the digital signals that are transmitted via these optical channels, typically comply with the well-known SONET/SDH standards. Therefore, the most popular bit rates for each optical channel are 2.5 and 10 Gbit/s. In addition, typical optical networks are constructed to comprise two optical fibers; one for carrying optical signals in one direction, while the other for carrying optical signals in the opposite direction.

The most simple network topology of an optical network comprises two terminals in a point-to-point configuration. However, when an optical network comprises more than two terminals, several topologies to interconnect these terminals are possible, such as: bus, tree, mesh, ring and the like. In a two fibers ring type network it is possible to implement network protection methods so that when one of the optical fibers is cut at one location along the optical ring, the signal can still be delivered to the required destination along the other fiber of the ring. Typically, in optical networks and especially in a ring type network using DWDM transmission the required wavelength/s is/are dropped at each terminal by using Optical Add/Drop Multiplexers ("OADMs"). A typical such OADM comprises at least one optical filter that enables the separation of one or more of the wavelengths from the others and allows forwarding the transmission at that wavelength/s to the local terminal. Another filter in the OADM is used to allow selectively insertion of one or more wavelengths to the multiplexed optical signal transmitted along the fiber. Therefore a specific optical channel transmitted at a specific wavelength is inserted at its originating location using the "add" function of an OADM and is "dropped" at its destination while using another OADM. In several applications there is a need to "add" and "drop" several optical channels at the same location. In such cases each OADM is equipped with several filters, where each such filter is operative to "add/drop" an optical channel transmitted at a specific wavelength. Typically these OADM devices are preset to "add" and "drop" specific wavelengths and cannot be modified during normal operation so as to be adapted to changes in the operating requirements. Thus, when it is required to add or drop a different wavelength at any location, the OADM must be replaced by another OADM that is preset to allow the drop and/or addition of the appropriate wavelength.

In optical systems where there is a need to connect several optical networks, e.g. optical rings, the most common solution is to convert the optical signals to their electrical form at the point of transfer to the other ring, rearrange them by using an electrical switching equipment, convert the electrical signals back to their optical form, and then transmit them along the other network. This solution that is called OEO (Optical-Electrical-Optical) is rather expensive, as it requires multiple conversions between the optical and the electrical formats of the transmitted signals. Another possible solution to connect between optical networks is the OOO (Optical-Optical-Optical) solution. In this solution, the optical signals arriving from one network, remain in their optical form, are rearranged by fully photonic switching equipment and sent in their original, optical form to the other network. However, photonic switching is still an immature technology that is very expensive, is unreliable and poses scalability problems. Such a switch is also a sensitive single point of failure that makes the network very much dependent on this centrally located equipment.

Additionally, when the number of optical channels that are required to be "added/dropped" in one location is greater then the capacity of the existing OADM, it would be required to insert additional optical filters in series with the existing OADM. Such a modification will typically break the signal continuity on the optical ring and might adversely affect the communication between several nodes on this ring. In addition to that, after adding such optical filters, the power budget of the optical ring has to be recalculated and the power of each channel should be adjusted accordingly. Therefore it would be desirable to find an effective solution for an optical network wherein each network node can be modified and expanded without affecting other nodes and without interrupting the communication between other nodes.

An additional problem arises when such fixed OADMs are used in an optical network comprising tunable optical transmitters and receivers so as to enable transmission and reception of signals at varying wavelengths. Since typical OADMs are not tunable, the capabilities of such a network are severely limited and the tunability advantages cannot be effectively used. The term "tunability" as used herein, is used to denote a feature of a transmitter and/or a receiver whereby this transmitter and/or receiver may be operated at various frequencies/wavelengths. The operating wavelength may be modified over a specific range by e.g. an external control, as may be required for the operation of the communication network. Therefore it would be desirable to find an effective solution for a network comprising tunable optical transmitters and optical receivers.

### Summary of the Invention

It is an object of the present invention to provide a novel, cost effective optical system for the transmission of optical signals.

It is yet another object of the present invention to provide methods for improving the transmission of optical signals in a network and in a number of connected optical networks.

It is still another object of the present invention to provide an optical communication apparatus and system that are adapted to overcome the drawbacks of the prior art described above and to allow better flexibility in operating an optical communication network.

Yet another object of the present invention is to provide a method that enables utilizing tunable transmitters and receivers without being required to carry out substantial changes to already existing networks.

Other objects of the invention will become apparent as the description of the invention proceeds.

According to a first aspect of the invention there is provided a optical communication system comprising:
a first plurality of optical transmitters;
at least one wavelength division multiplexer, adapted to multiplex optical signals transmitted at different wavelengths to obtain a multiplexed optical signal;
at least one dropping/adding unit adapted to be provided with said multiplexed optical signal transmitted along a first transmission path and divert a first portion thereof to a second transmission path, wherein the first portion comprises substantially the entire spectrum of the multiplexed optical signal and forwarding a second portion of the multiplexed optical signal along said first transmission path; and
at least one optical receiver, adapted to receive the first portion of the multiplexed optical signal diverted to the second transmission path.

Preferably, the system comprising a plurality of optical receivers, each of which is adapted to operate at a wavelength belonging to the wavelength range of the part of the diverted first portion of the multiplexed optical signal.

In accordance with a preferred embodiment of the invention, the system further comprising at least one filtering means adapted to divide the first portion of the multiplexed optical signal diverted by the at least one dropping/adding unit, into at least two parts, each comprising a wavelength range substantially different than the others, and forwarding at least one of these two parts towards the at least one optical receiver.

By yet another embodiment of the invention, the at least one dropping/adding unit comprises at least one optical coupler.

By still another embodiment, the second portion of the multiplexed optical signal is substantially equal to an optical signal having the energy of the original multiplexed optical signal less that of the first portion of the multiplexed optical signal, and a wavelength range of said second portion of the multiplexed optical signal is substantially equal to that of the original multiplexed optical signal.

According to another aspect of the invention, there is provided an optical communication system for transmitting optical signals in an optical network comprising:
a plurality of network elements and at least one optical path extending therebetween, wherein at least one of the network elements comprises at least one tunable optical transmitter capable of operating at a first plurality of wavelengths and at least one other of the network elements comprises at least one optical receiver;
at least one first optical coupler adapted to couple the at least one tunable optical transmitter to the at least one optical path and at least one second coupler adapted to couple the at least one optical receiver to said at least one optical path;
wherein the at least one first optical coupler is adapted to allow transmission of optical signals from said tunable optical transmitter irrespective of their wavelength and combining them with other optical signals transmitted along said at least one optical path passing through said optical coupler; and
wherein the optical signals transmitted by the tunable optical transmitter, are transmitted at a wavelength corresponding to a wavelength at which the at least one optical receiver is operative.

According to yet another aspect of the invention, there is provided an optical communication system adapted for transmitting and receiving of optical signals over a plurality of optical networks, wherein a first of the plurality of optical networks comprises at least two network elements and wherein a second of the plurality of optical networks comprises at least one network element, wherein at least one of the network elements comprises at least one tunable optical transmitter and at least one other of the network elements comprises at least one optical receiver;
a plurality of optical couplers, adapted to couple the at least one tunable optical transmitter or the at least one optical receiver to at least one optical path;
wherein the optical coupler associated with the tunable optical transmitter is adapted to allow transmission of optical signals from said tunable optical transmitter irrespective of their wavelength and to combine them with other optical signals transmitted along the least one optical path; and
wherein optical signals transmitted by the tunable optical transmitter, are transmitted at a wavelength corresponding to a wavelength at which the at least one optical receiver is operative.

In accordance with yet another embodiment of the invention there is provided an optical communication system for transmitting optical signals over at least one optical path extending between at least two network elements, wherein each of the at least two network elements comprises at least one optical transmitter and at least one optical receiver, and wherein the at least one optical transmitter and the at least one optical receiver are each coupled to the at least one optical path via at least one optical coupler, and wherein each of the at least one optical path is further connected to an optical protection switch adapted to block under normal operating conditions the transmission of optical signals ingressing the optical protection switch, and to allow transmission of optical signals through the optical protection switch in response to a fault occurring along the corresponding at least one optical path.

Preferably, the at least one optical path is connected in a ring type topology.

By yet another preferred embodiment of the invention, the optical communication system further comprising means to detect a fault along said at least one optical path and activate said optical protection switch in response to a fault detection.

According to still another embodiment of the invention, there is provided an optical communication system adapted for transmitting and receiving of optical signals over at least two optical networks, wherein a first of said optical networks comprises a plurality of network elements and wherein a second of said optical networks comprises at least one network element. The network elements comprise at least one optical transmitter and at least one optical receiver, and
wherein at least one first transmitter associated with the first optical network is adapted to transmit an optical signal destined to another network element belonging to the first optical network at a wavelength selected from among a first plurality of wavelengths, and wherein at least one second transmitter associated with the first optical network is adapted to transmit an optical signal destined to a network element belonging to another optical network at a wavelength selected from among a second plurality of wavelengths from,
characterized in that no wavelength included in the first plurality of wavelengths is included in the second plurality of wavelengths, and at least the first optical network further comprises at least one optical coupling device operative to allow transfer of an optical signal transmitted at a wavelength selected from among the second plurality of wavelengths, and to block the transfer of an optical signal transmitted at a wavelength selected from among said first plurality of wavelengths from being transmitted to a location that is not included in the first optical network.

In the alternative or in addition, the at least one first transmitter is capable of transmitting optical signals also at a wavelength selected from among the second plurality of wavelengths, e.g. use of a tunable transmitter.

Furthermore, the present invention should also be understood to encompass cases where at least one tunable transmitter is used instead of using the at least one first transmitter and the at least one second transmitter, so that when an optical signal should be transmitted to another network element belonging to the first optical network, the signal shall be transmitted by the at least one tunable transmitter at a wavelength selected from among a first plurality of wavelengths, whereas when an optical signal should be transmitted to a network element belonging to another optical network, the signal shall be transmitted by that at least one tunable transmitter at a wavelength selected from among a second plurality of wavelengths.

According to yet another embodiment of the invention there is provided an optical communication system adapted for transmitting and receiving of optical signals over more than two optical networks, wherein at least a first optical network comprises a plurality of network elements and wherein each of the other optical networks comprises at least one network element. The network elements of the first optical network comprise each at least one optical transmitter and at least one optical receiver and wherein at least one transmitter is adapted to transmit an optical signal at a wavelength selected from among a first plurality of wavelengths when the optical signal is destined to another network element belonging to that first optical network, and wherein at least one transmitter is adapted to transmit an optical signal at a wavelength selected from among a second plurality of wavelengths from such a network element belonging to the first optical network when the optical signal is destined to a network element belonging to another optical network. By this embodiment the system is characterized in that:
no wavelength included in the first plurality of wavelengths is included in the second plurality of wavelengths;
at least the first optical network further comprises at least one optical coupling device operative to allow transfer of an optical signal transmitted at a wavelength selected from among the second plurality of wavelengths, and to block the transfer of an optical signal transmitted at a wavelength selected from among the first plurality of wavelengths; and
wherein at least two of the more than two optical network further comprise OADMs that allow addition and drop of optical signal received thereby which are transmitted at predetermined wavelengths selected from said second plurality of wavelengths.

In the alternative or in addition, the at least one first transmitter is capable of transmitting optical signals also at a wavelength selected from among the second plurality of wavelengths, e.g. by using a tunable transmitter.

Preferably, at least one of the first and second pluralities of wavelengths comprises a continuous range of wavelengths.

In accordance with another aspect of the invention, there is provided an optical communication apparatus comprising a dropping/adding unit connected to a transmission path where a wavelength division multiplexed optical signal is transmitted, and being capable of:
dropping an optical signal having a first portion of the energy of the wavelength division multiplexed optical signal transmitted on the transmission path wherein the first portion comprises substantially the entire spectrum of the optical signal;
forwarding the remaining of the wavelength division multiplexed optical signal along the transmission path;
adding an optical signal transmitted at at least one wavelength to the forwarded optical signal along the transmission path,
and wherein the optical communication apparatus is adapted to forward the first portion of the wavelength division multiplexed optical signal towards at least one optical receiver.

Preferably, the apparatus further comprising optical filtering means adapted to divide the first portion of the wavelength division multiplexed optical signal into at least two substantially different portions thereof.

More preferably, the optical filtering means is adapted to forward at least one of the two portions to the at least one optical receiver.

According to yet another aspect of the invention, there is provided a method for transmitting an optical signal in an optical communication network comprising a plurality of network elements. The method comprises the steps of:
a. providing a first network element that comprises at least one tunable optical transmitter capable of operating at a plurality of wavelengths;
b. providing a second network element that comprises at least one optical receiver operative at a first wavelength included among said plurality of wavelengths;
c. providing an optical coupler adapted to couple the output of the at least one tunable optical transmitter to an optical transmission path extending between the first and second network elements, adapted to forward transmission of optical signals transmitted by the at least one tunable optical transmitter irrespective of their wavelength and combine them with other optical signals transmitted along the optical transmission path;
d. tuning the at least one tunable optical transmitter so that a transmission destined to the second network element be transmitted at said first wavelength; and
e. transmitting an optical signal from the at least one tunable optical transmitter via said optical coupler and along said optical transmission path.
   According to another embodiment of the invention, there is provided a method for transmitting optical signals in a system comprising at least a first and a second communication networks wherein the method comprises the steps of:
i. providing a first network element associated with the first communication network which comprises at least one optical transmitter;
ii. transmitting optical signals by the at least one optical transmitter, wherein optical signals are transmitted at a first wavelength selected from a first group of wavelengths consisting of a first plurality of wavelengths if said optical signals are destined to another network element associated with the first communication network, and wherein optical signals are transmitted at a second wavelength selected from a second group of wavelengths consisting of a second plurality of wavelengths when the optical signals are destined to another network element not associated with said first communication network, and no wavelength being a member of the first group of wavelengths is a member of said second group of wavelengths;
iii. allowing transfer of the optical signals from the first communication network to the second communication network if their wavelength is a wavelength being a member of the second group of wavelengths and preventing the transfer of the optical signals from the first communication network to the second communication network if their wavelength is a wavelength being a member of the second group wavelengths.

By still another embodiment of the invention, there is provided a method of forwarding an optical signal in an optical communication network which comprises the steps of:
(i) receiving a multiplexed optical signal comprising a plurality of multiplexed optical signals transmitted at different wavelengths, all of which comprise a wavelength range characterizing said multiplexed optical signal;
(ii) forwarding a first portion of said multiplexed optical signal towards at least one optical receiver, wherein the wavelength range of the first portion is substantially equivalent to the entire wavelength range of the multiplexed optical signal; (iii)forwarding the remaining of the multiplexed optical signal along a transmission path in the optical network.

Preferably, this method further comprising the steps of:
a. dividing the first portion of the multiplexed optical signal into a plurality of optical signals, each being at a substantially different wavelength range than the others;
b. forwarding at least one of the divided optical signals towards at least one optical receiver operative at a wavelength belonging to the wavelength range of the divided optical signal.

### Brief Description of the Drawings

The present invention will be understood and appreciated more fully from the following detailed description, taken in conjunction with the drawings in which:
Fig. 1 illustrates schematically a typical, prior art optical network, using WDM technology in a ring type topology;
Fig. 2 illustrates schematically a typical structure of a prior art OADM - Optical Add/Drop Multiplexer, used in the optical network shown in Fig. 1;
Fig. 3 illustrates schematically an optical network of the present invention that comprises optical coupler arrays;
Fig. 4 demonstrates details of an optical coupler array that may be applied in the optical network shown in Fig. 3;
Fig. 5 illustrates schematically an optical protection switch that may be applied in the optical network shown in Fig. 3;
Fig. 6 presents a typical, prior art optical network, comprising two optical rings interconnected via an electrical switch;
Fig. 7 illustrates a typical, prior art optical network, comprising two optical rings interconnected via an optical switch;
Fig. 8 illustrates an example of an optical network according to the present invention, comprising two optical rings that are interconnected via an optical coupler array;
Fig. 9 demonstrates an optical coupler arrays used to connect the two optical rings in the optical network shown in Fig. 8;
Fig. 10 presents a frequency plan used in the optical network of Fig. 11 and 12;
Fig. 11 illustrates schematically an optical network, comprising two optical rings interconnected via a combination of OADMs and optical coupler array;
Fig. 12 illustrates schematically an optical network, comprising three optical rings interconnected via a combination of OADMs and optical coupler arrays; and
Fig. 13 demonstrates details of a further improvement of an optical coupler array that may be applied, according to the present invention, in the optical network shown in Fig. 3.

### Detailed Description of Preferred Embodiments

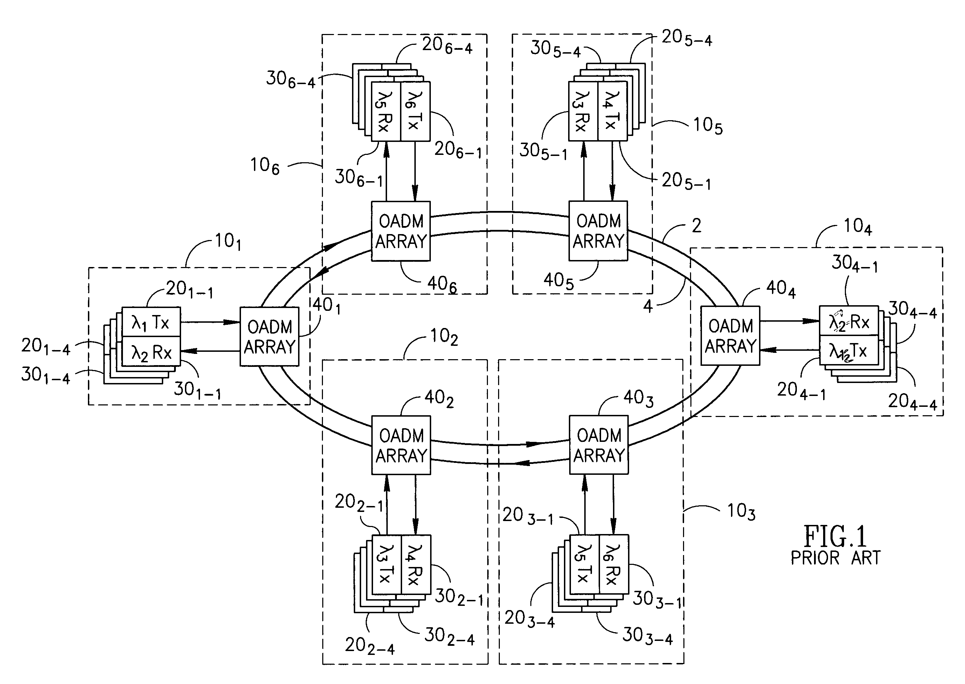

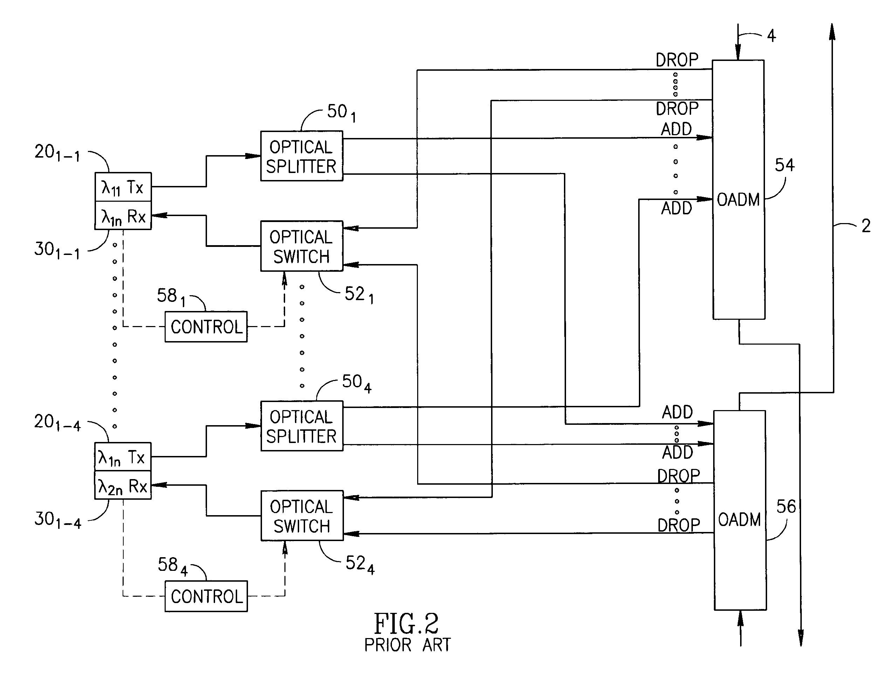

Fig. 1 describes a prior art optical network of a ring type configuration. The optical network illustrated in Fig.1 comprises six terminals 10₁, 10₂, 10₃, 10₄, 10₅ and 10₆, each provided with, for example, four optical transmitters (20₁₋₁-20₁₋₄, 20₂₋₁-20₂₋₄, 20₃₋₁-20₃₋₄, 20₄₋₁-20₄₋₄, 20₅₋₁-20₅₋₄ and 20₆₋₁-20₆₋₄, each operative to receive a corresponding electrical signal and to transmit it at a different wavelength: λ₁₋₁-λ₁₋₄, λ₃₋₁-λ₃₋₄, λ₅₋₁-λ₅₋₄, λ₂₋₁-λ₂₋₄, λ₄₋₁-λ₄₋₄, and λ₆₋₁-λ₆₋₄ respectively) and four optical receivers (30₁₋₁-30₁₋₄, 30₂₋₁-30₂₋₄, 30₃₋₁-30₃₋₄, 30₄₋₁-30₄₋₄, 30₅₋₁-30₅₋₄ and 30₆₋₁-30₆₋₄, each operative to receive optical signals at a different wavelength: λ₂₋₁-λ₂₋₄, λ₄₋₁-λ₄₋₄, λ₆₋₁-λ₆₋₄, λ₁₋₁-λ₁₋₄, λ₃₋₁-λ₃₋₄, and λ₅₋₁-λ₅₋₄ and to convert it to a corresponding electrical signal respectively). Optical transmitters 20₁₋₁-20₁₋₄, 20₂₋₁-20₂₋₄, 20₃₋₁-20₃₋₄, 20₄-₁-20₄₋₄, 20₅₋₁-20₅₋₄ and 20₆₋₁-20₆₋₄ as well as optical receivers 30₁₋₁-30₁₋₄, 30₂₋₁-30₂₋₄, 30₃₋₁-30₃₋₄, 30₄₋₁-30₄₋₄, 30₅₋₁-30₅₋₄ and 30₆₋₁-30₆₋₄ are connected to optical fibers 2 and 4 via OADM arrays 40₁, 40₂, 40₃, 40₄, 40₅ and 40₆, respectively. The operation of OADM arrays 40₁, 40₂, 40₃, 40₄, 40₅ and 40₆ will be further described in conjunction with Fig. 2.

Let us consider an example whereby optical transmitter 20₁₋₁ is operative to transmit an optical signal at a wavelength of λ₁₋₁, to optical receiver 30₄₋₁ and optical transmitter 20₄₋₁ is adapted to transmit an optical signal at a wavelength of λ₂₋₁ to optical receiver 30₁₋₁. In a similar manner, each of the other optical transmitters is operative to transmit an optical signal at a specific wavelength to communicate with a specific optical receiver that is operative to receive signals transmitted at that specific wavelength.

In the example depicted at Fig.1, each OADM is operative to transmit up to four optical channels (each channel operative at a different wavelength) and to receive up to four optical channels at typically other four specific wavelengths. Therefore the optical transmitters have to be configured to operate at the same wavelengths as the OADM they are connected to and likewise the optical receivers have to be configured to operate at the same wavelengths as the OADM they are connected to.

The WDM optical signals are transmitted over two optical fibers. In optical fiber 2 the optical signals are conveyed in the CW-Clockwise direction, while in optical fiber 4, the optical signals are conveyed in the CCW - Counter-Clockwise direction.

In the example demonstrated, optical signals are transmitted under normal operating conditions, from transmitter 20₁₋₁ over optical fiber 2, pass through OADM arrays, 40₁, 40₆, 40₅ and 40₄ and arrive at optical receiver 30₄₋₁. The optical signals transmitted from optical transmitter 20₄₋₁ are conveyed along optical fiber 2, pass through OADMs arrays 40₄, 40₃, 40₂ and 40₁ and arrive at optical receiver 30₁₋₁. When a fault is detected in the network (while operating under normal operating conditions) e.g. if there is a fiber cut, for example between OADM arrays 40₂ and 40₃, there will be no change in the optical signal transmission between optical transmitter 20₁₋₁ and optical receiver 30₄₋₁, but the optical signal from optical transmitter 20₄₋₁ will arrive to optical receiver 30₁₋₁ over fiber 4 passing through OADM arrays 40₄, 40₅, 40₆ and 40₁. In this manner the ring network architecture comprising two optical fibers 2 and 4, is protected against a fault occurring at any location of the network. It should be understood that in a similar manner, each of the other optical transmitters communicate with a corresponding optical receiver in the optical network and are adapted to affect the above described network protection method, *mutatis mutandis.*

As will be appreciated by those skilled in the art, one of the major disadvantages of the prior art system described, is that each optical transmitter, each optical receiver and each OADM array is preset to operate at a given wavelength. Therefore if any change were to be made to the transmission plan of such a network, it would require manual replacement of equipment in several network nodes. Also, when additional optical channels need to be transmitted between OADMs, the network needs to be modified, typically causing service interruption to several other nodes in the network.

Fig. 2 describes optical terminal 10₁ in more details. Specifically, Fig. 2 describes the operation of OADM array 40₁ in conjunction with optical transmitters 20₁₋₁-20₁₋₄ operative at wavelengths λ₁₋₁-λ₁₋₄ and optical receiver 30₁₋₁-30₁₋₄ operative to receive signals transmitted at wavelengths λ₂₋₁-λ₂₋₄. An optical signal is transmitted from transmitter 20₁₋₁ and is splitted by optical splitter 50₁. One part of the signal is conveyed to the "add" input of OADM 54 while the other is conveyed to the "add" input of OADM 56. Similarly, optical signals are coupled from optical transmitters 20₁₋₂-20₁₋₄ to OADMS 54 and 56 via optical splitters 50₂-50₄. OADMS 54 and 56, each comprise optical filters that enable selective insertion of optical signals at λ₁₋₁-λ₁₋₄ from transmitters 20₁₋₁-20₁₋₄ into optical fibers 2 and 4 respectively. A multiplexed signal received at terminal 10₁ is conveyed to OADM 54 or OADM 56, from optical fibers 2 or 4, respectively. It is then passed through optical filters that separate the signal transmitted at the predetermined wavelengths λ₂₋₁-λ₂₋₄ from the rest of the multiplexed signal. The separated signals from either OADM 54 or 56 are then each conveyed via optical switches 52₁-52₄ to the corresponding optical receiver 30₁₋₁-30₁₋₄, while the remaining non-separated multiplexed signal is forwarded along that fiber to the proceeding network element. In other words, OADM 54 operates by selectively extracting the optical signals transmitted along optical fiber 2 at the predetermined wavelength λ₂₋₁-λ₂₋₄ and inserting optical signal transmitted by transmitters 20₁₋₁-20₁₋₄ at the predetermined wavelength 20₁₋₁-20₁₋₄ along that optical fiber 2. At the same time, optical signals transmitted at other wavelengths pass through OADM 54 practically unchanged. OADM 56 performs the same function as optical OADM 54 but on optical signals added to or dropped from optical fiber 4, *mutatis mutandis.*

Under normal operating conditions, each of controllers 58₁-58₄ controls the corresponding optical switch 52₁-52₄ to ensure that optical signals arriving from optical fiber 2 via OADM 54 will be forwarded to the corresponding receiver 30₁₋₁-30₁₋₄. When no optical signals are received at receiver 30₁₋₁-30₁₋₄, the corresponding optical switch 52₁-52₄ is activated by the corresponding controller 58₁-58₄ to forward the optical signals arriving at the predetermined wavelength λ₂₋₁-λ₂₋₄ from optical fiber 4 via OADM 56. In this manner the optical communication is protected in case of a fiber cut upstream along optical fiber 2. OADM arrays 40₂, 40₃, 40₄, 40₅ and 40₆ are operative in a similar manner, *mutatis mutandis.*

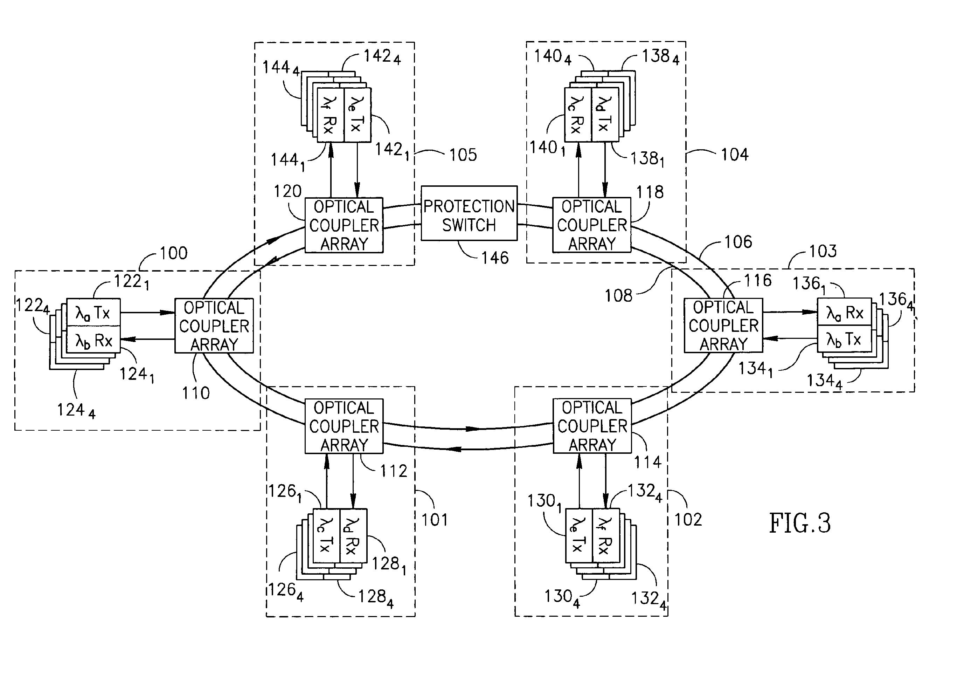

Reference is now made to Fig. 3 that presents a non-limiting example of an optical network constructed and operative according to a preferred embodiment of the present invention. The optical network described in Fig.3 comprises six terminals 100, 101, 102, 103, 104 and 105, each provided with four optical transmitters 122₁-122₄, 126₁-126₄, 130₁-130₄, 134₁-134₄, 138₁-138₄ and 142₁-142₄ respectively and four optical receivers 124₁-124₄, 128₁-128₄, 132₁-132₄, 136₁-136₄, 140₁-140₄ and 144₁-144₄ respectively. Each of the four pairs comprising an optical transmitter and an optical receiver is coupled to optical fibers 106 and 108 via optical coupler array 110, 112, 114, 116, 118 and 120, respectively. Optical transmitters 122₁-122₄, 126₁-126₄, 130₁-130₄, 134₁-134₄, 138₁-138₄ and 142₁-142₄ may be operated to transmit at variable wavelengths λₐ₁-λₐ₄, λ_{c1}-λ_{c4}, λₑ₁-λₑ₄, λ_{b1}-λ_{b4}, λ_{d1}-λ_{d4}, λ_{f1}-λ_{f4} respectively, while optical receivers 124₁-124₄, 128₁-128₄, 132₁-132₄, 136₁-136₄, 140₁-140₄ and 144₁-144₄ are operative to receive optical signals at variable wavelengths λ_{b1}-λ_{b4}, **λ**_{d1}-_{d4}, **λ**_{f1}-λ_{f4}, **λ**ₐ₁-**λ**ₐ₄, **λ**_{c1}-λ_{c4}, λₑ₁-λₑ₄ respectively. As should be noted, the nomenclature λₐ₁-λₐ₄, λ_{c1}-λ_{c4}, λₑ₁-λₑ₄, **λ**_{b1}-**λ**_{b4}, X_{d1}-λ_{d4}, λ_{f1}-λ_{f4} indicates that optical transmitters 122₁-122₄, 126₁-126₄, 130₁-130₄, 134₁-134₄, 138₁-138₄ and 142₁-142₄ as well as optical receivers 124₁-124₄, 128₁-128₄, 132₁-132₄, 136₁-136₄, 140₁-140₄ and 144₁-144₄ are operative at any desired wavelength chosen out of a plurality of wavelengths, as opposed to the fixed and predetermined wavelength at which optical transmitters 20₁₋₁-20₁₋₄, 20₂₋₁-20₂₋₄, 20₃₋₁-20₃₋₄, 20₄₋₁-20₄₋₄, 20₅₋₁-20₅₋₄ and 20₆₋₁-20₆₋₄ and optical receivers 30₁₋₁-30₁₋₄, 30₂₋₁-30₂₋₄, 30₃₋₁-30₃₋₄, 30₄₋₁-30₄₋₄, 30₅₋₁-30₅₋₄ and 30₆₋₁-30₆₋₄, of the prior art network demonstrated in Fig. 1, are operable. This characteristic of optical transmitters and receivers is referred to herein as "tunable" transmitters or receivers, as the case may be. An example of such optical tunable transmitters and receivers was described in our co-pending patent application USSN 10/266,580. The wavelength control of each of the optical transmitters 122₁-122₄, 126₁-126₄, 130₁-130₄, 134₁-134₄, 138₁-138₄ and 142₁-142₄ as well as optical receivers 124₁-124₄, 128₁-128₄, 132₁-132₄, 136₁-136₄, 140₁-140₄ and 144₁-144₄ is preferably done by a central management system that sends out commands to every optical transmitter and optical receiver. The transmission of the tuning commands from a central management system may be done by any of the methods known in the art per se, e.g. via another network such as an external IP network or via an in-band communication channel, using a dedicated wavelength for this purpose, and the like.

In order to utilize efficiently the tunability characteristic of the optical transmitters and receivers, the spectrum comprising plurality of applicable wavelengths should preferably be made available at each network element, as there is no predetermination of the wavelength that will be used in that network element. However, as will be appreciated by those skilled in the art, other combinations can be made to apply different parts of the spectrum at different network elements, and the present invention should be understood to encompass also any such combinations, as well as combinations which include tunable and fixed transmitters/receivers at the same network. Consequently, in this preferred embodiment, the optical network is not based on predefined wavelength specific OADMs as described in Fig.2, which operating mode is preset to allow a certain transmitting wavelength and a certain receiving wavelength, and prevent transmission of signals being at other wavelengths than the predefined ones. To overcome this drawback, in the system described in this embodiment and illustrated in Fig. 3, each of the optical transmitters 122₁-122₄, 126₁-126₄, 130₁-130₄, 134₁-134₄, 138₁-138₄ and 142₁-142₄ as well as optical receivers 124₁-124₄, 128₁-128₄, 132₁-132₄, 136₁-136₄, 140₁-140₄ and 144₁-144₄ are connected to/from optical fibers 106 and 108 via optical coupler arrays 110, 112, 114, 116, 118 and 120. For example, optical transmitters 122₁-122₄ and optical receivers 124₁-124₄ are connected to optical fibers 106 and 108 via optical coupler array 110. Similarly, optical transmitters 126₁-126₄, 130₁-130₄, 134₁-134₄, 138₁-138₄ and 142₁-142₄ and optical receivers 128₁-128₄, 132₁-132₄, 136₁-136₄, 140₁-140₄ and 144₁-144₄ are connected to optical fibers 106 and 108 via optical coupler arrays 112, 114, 116, 118 and 120, *mutatis mutandis.* The network shown Fig. 3 is configured in a ring topology. However, it should be appreciated that the present invention also encompasses similar networks configured in other topologies such as bus or tree that can be constructed by implementing similar type of tunable transmitters and receivers coupled to optical fibers in the same manner as described herein.

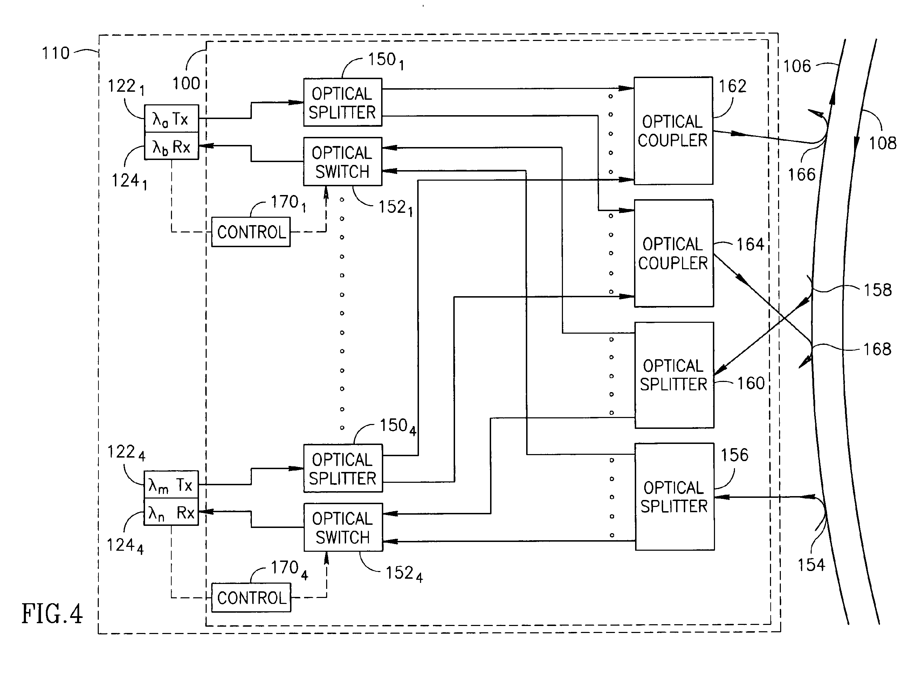

Fig. 4 describes terminal 100 in more details. When a multiplexed optical signal transmitted along optical fiber 106 reaches optical coupler 154, part of the signal is forwarded via optical splitter 156 towards optical switches 152₁-152₄, while the remaining of the signal is conveyed along fiber 106 to coupler 166. Similarly, when a multiplexed optical signal transmitted along optical fiber 108 reaches optical coupler 158, part of the signal is forwarded via optical splitter 160 towards optical switches 152₁-152₄, while the remaining of the signal is conveyed along fiber 108 to coupler 168. Optical switches 152₁-152₄ are each operative to connect to the corresponding receiver 124₁-124₄, an optical signal arriving either from optical fiber 106 or from optical fiber 108. Each of the signals generated at transmitters 122₁-122₄ is transmitted at the appropriate wavelength λₐ₁₋λₐ₄, where each of these wavelengths is selected from among a predetermined plurality of wavelengths. The optical signal transmitted from transmitters 122₁-122₄ is splitted at optical splitters 150₁-150₄ to produce two similar optical signals preferably but not necessarily, at a substantially equal intensity. One of the two optical signals, from each of the optical splitters 150₁-150₄ is forwarded, via optical coupler 162 to coupler 166 to be combined with the signal received from coupler 154 along fiber 106, while the other is forwarded, via optical coupler 164 to coupler 168 to be combined with the signal received from coupler 158 along fiber 108. It should be appreciated that optical couplers 154, 158, 166 and 168 can be designed to provide a large range of coupling/splitting ratio. For example an optical coupler can be designed to provide equal coupling ratio where such a coupler is referred to as a 50/50 coupler, or it can split 90% of the optical signal into one port and the remaining 10% to the other port. In which case it is referred to as a 90/10 coupler. The optimal coupling ratio of each coupler may depend on several parameters, such as: the specific topology of the network, the number of network elements, the transmitter power, the receiver sensitivity etc.

Under normal operation, controllers 170₁-170₄ control the respective optical switches 152₁-152₄, to ensure that optical signals arriving from optical fiber 106 via coupler 154 and optical splitter 156 will be properly forwarded to receivers 124₁-124₄. When no optical signals are received at any of the receivers 124₁-124₄, the corresponding optical switch of optical switches 152₁-152₄ is activated by the respective controller 170₁-170₄ so as to forward the optical signals arriving from optical fiber 108 via coupler 158 and optical splitter 160. In this manner the optical communication is protected and can reach its destination even in case of a fiber cut upstream along optical fiber 106.

Alternatively, the optical signals may be coupled from optical fibers 106 and 108 to receivers 124₁-124₄ via optical couplers that combine the optical signals from both optical fibers instead of optical switches 152₁-152₄. This solution is more cost effective but could insert more attenuation in the signal path to receivers 124₁-124₄. The optical network illustrated in Fig.3 also comprises a protection switch 146. This protection switch makes sure that, at any time, each optical signal arrives at any optical receiver only via one of the two optical fibers 106 or 108. Therefore no problem of an optical interference should arise when optical signals from both optical fibers 106 and 108 are combined at the input to receivers 124₁-124₄. Switch 146is normally open to prevent undesirable propagation of optical signals along the two fibers ring type of network (optical fibers 106 and 108). In the prior art optical network illustrated in Fig. 1, such a switch is not required since each optical signal is blocked by one of OADMs 40₁, 40₂, 40₃, 40₄, 40₅ and 40₆, so that no optical signal is propagating along the ring along optical fibers 2 and 4. Since no OADMs are implemented in the optical network described in Fig. 3, it would be required to avoid a situation whereby an endless loop is created for each of the optical signals transmitted along optical fibers 106 and 108. When a fault is detected along either of the optical fibers 106 and 108 or both, protection switch 146 is closed to allow establishing of a protection path for the optical signals. Under normal operating conditions, the optical signal transmitted from optical transmitter 122₁ in the example shown, arrives to optical receiver 136₁ over the CCW optical fiber 108, passing through optical coupler arrays 110, 112, 114 and 116. The optical signals transmitted from optical transmitter 134₁ arrives to optical receiver 124₁ over optical fiber 106 passing through optical coupler arrays 116, 114, 112 and 110. However, when a transmission fault is detected, for example a fiber cut occurs between optical coupler arrays 112 and 114, then the protection switch 146 is closed. Consequently, the optical signals transmitted from optical transmitter 122₁ arrive to optical receiver 136₁ over the CW optical fiber 106, passing through optical coupler arrays 110, 120, protection switch 146 and optical coupler arrays 118 and 116. Similarly, optical signals from optical transmitter 134₁ will arrive to optical receiver 124₁ over optical fiber 108 passing through optical coupler arrays 116, 118, protection switch 146 and optical coupler arrays 120 and 110. In this way, the optical network architecture demonstrated that comprises two optical fibers (106 and 108) is protected against a fault at any location in the network.

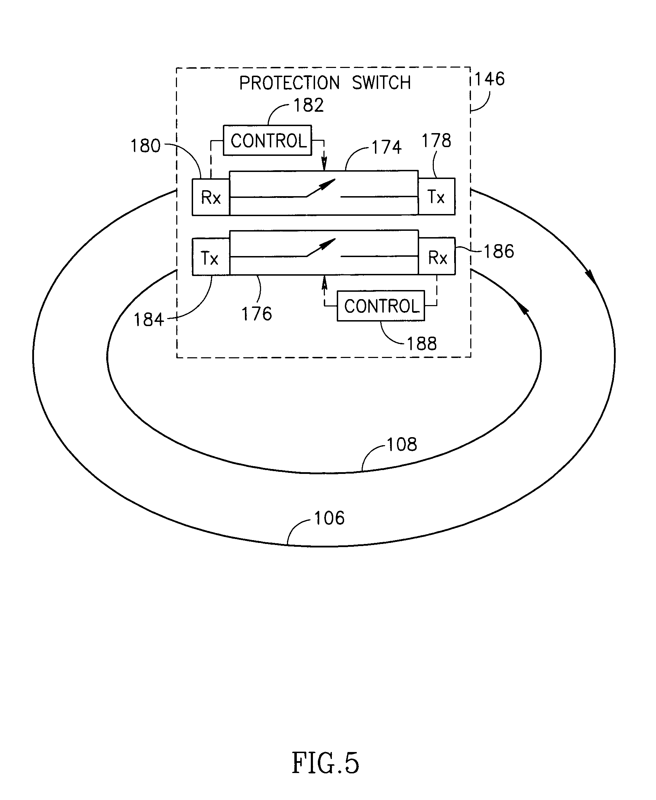

Fig. 5 describes in details the protection switch 146 illustrated in Fig. 3. For the sake of clarity, optical transmitters 122₁-122₄, 126₁-126₄, 130₁-130₄, 134₁-134₄, 138₁-138₄ and 142₁-142₄ and optical receivers 124₁-124₄, 128₁-128₄, 132₁-132₄, 136₁-136₄, 140₁-140₄ and 144₁-144₄, as well as optical coupler arrays 110, 112, 114, 116, 118 and 120 are not shown in Fig. 5. Instead, only optical fibers 106, 108 and a detailed illustration of protection switch 146 are shown in Fig. 5. Protection switch 146 comprises two optical switches 174 and 176 that are connected in series with optical fibers 106 and 108 respectively, and are both normally open to prevent the optical signals reaching protection switch 146 from being forwarded.

When the network's control identifies a fault in transmission which requires the protection switch 146 to close, an appropriate command is transmitted to the protection switch, resulting in closing switches 174 and 176, thereby establishing a protection path for forwarding the signals' transmission. Once switch 174 is closed, optical transmitter 178 shall transmit along optical fiber 106 all optical signals received at receiver 180. Similarly, closure of switch 176 enables the transmission of the optical signals received at receiver 186 to be transmitted along optical fiber 108 by transmitter 184.

According to another embodiment of this aspect of the invention, optical transmitter 178 is operative to transmit all optical signals received at receiver 180 while inserting together with the optical signals, an optical test signal being at a different wavelength than the rest of the transmitted optical signals. In this example, the wavelength of the optical test signal is selected so that the signal does not to interfere with any traffic transmitted at any of the wavelengths λₐ₁-λₐ₄, λ_{c1}-λ_{c4}, λₑ₁-λₑ₄, λ_{b1}-λ_{b4}, λ_{d1}-λ_{d4} *,* λ_{f1}-λ_{f4}. Under normal operating conditions, the optical test signal is transmitted by transmitter 178 and travels along optical fiber 106, and then received by optical receiver 180. As long as optical receiver 180 receives that pre-defined optical test signal, which receipt confirms the integrity of the whole path (along fiber 106), controller 182 ensures that optical switch 174 remains open. Similarly, optical transmitter 184 transmits an optical test signal along optical fiber 108 and as long as this test signal is received at optical receiver 186, controller 188 ensures that optical switch 176 remains open. When one of optical fibers 106 and 108 is cut, the respective optical receiver 180 or 186 will not receive the corresponding optical test signal and consequently, the appropriate controller of 182 and 188 will ensure the closure of the corresponding optical switch 174 or 176, thereby establishing the protection path.

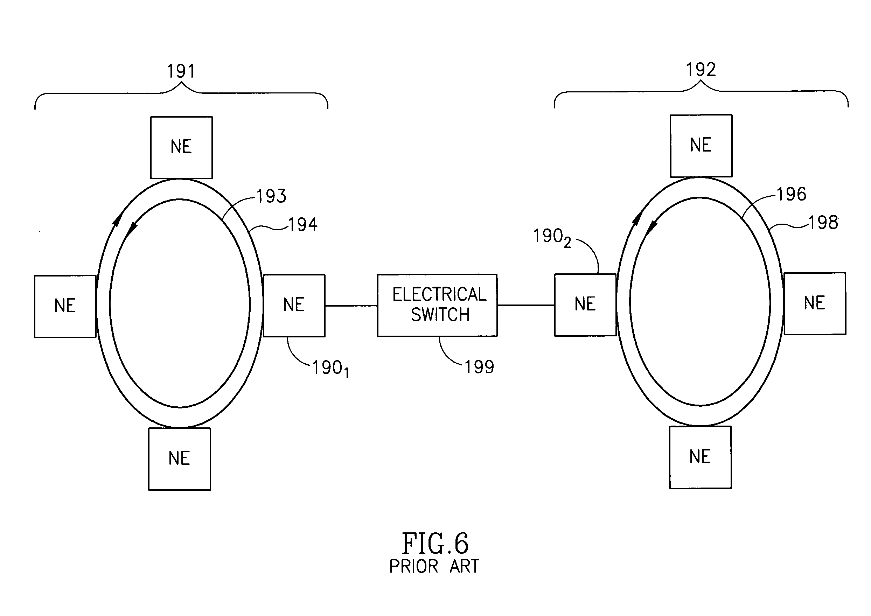

In various applications, there arises the need to connect several optical networks, each configured, for example, in a ring topology. Fig. 6 illustrates a connection between two optical networks 191 and 192, as known in the art. Optical network 191 comprises optical fibers 193 and 194 while the other optical network, 192, comprises optical fibers 196 and 198. Both optical networks illustrated in this example further comprise a plurality of network elements and an optical to electric converter (e.g. transceiver) 190₁ and 190₂, respectively. The optical signals that need to be transferred from network 191 to network 192 are selectively dropped at transceiver 190₁, converted from the optical domain to their electrical representation and are forwarded to electrical switch 199. The electrical switch is operative to allow the transfers and possible cross-connect from rings 193 and 194 of network 191 to the optical rings 196 and 198 of network 192 and vice versa, in accordance with the signal's destination. The electrical signals are then converted back by the electric to optical converter 190₂ and transmitted to their destination at network 192. For the sake of simplicity, the OADMs, the transmitters and receivers of the various network elements are not shown. However, their operation is substantially similar to the corresponding device as described in connection with Figures.1 and 2. Nevertheless, as will be appreciated by those skilled in the art, this method is cumbersome and expensive, and requires double conversion from an optical signal to an electrical signal and back to an optical signal. The bandwidth of the traffic that can be transmitted that way is restricted by the bandwidth that can be converted by each of the electro-optical converters 190₁ and 190₂. Additionally, the method requires an electrical switch that might be expensive and might adversely affect the transparency of the signal path.

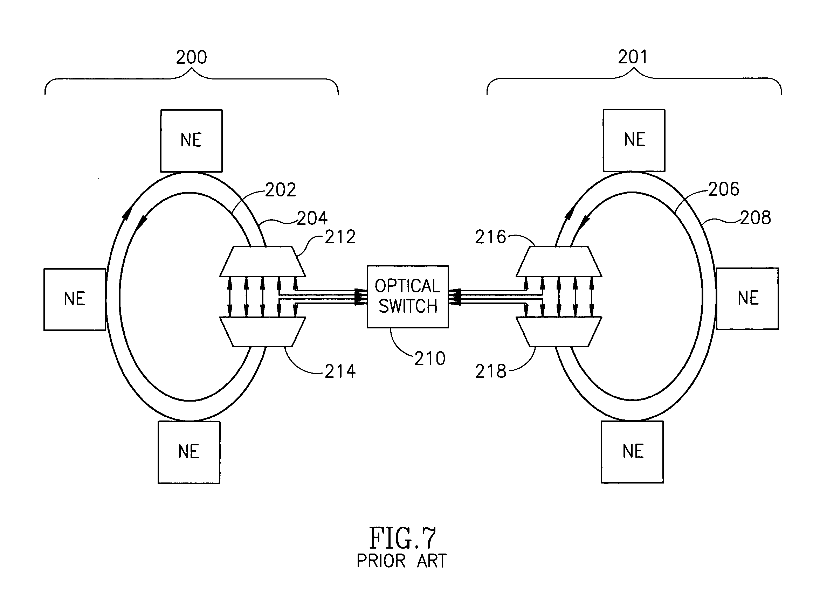

Another somewhat similar prior art method for connecting two optical networks is illustrated in Fig. 7. Again, the first optical network, 200, comprises two optical rings 202 and 204 and a number of network elements. The second optical network 201, comprises two optical rings 206 and 208 and a number of network elements. Optical signals transmitted along network 200 are selectively dropped by OADMs 212 and 214, and transferred to the second optical network 201 via optical switch 210. The optical signals are re-routed at the optical switch 210 and are forwarded to the second optical network via OADMs 216 and 218. Similarly, optical signals from optical network 201 are selectively dropped by OADMs 216 and 218, and transferred to optical network 200 via optical switch 210 and OADMs 212 and 214. By this method, the optical signals are transferred from one optical network to the other in their optical form, without being converted into their electrical form for the switching stage. Still, in this case there is a need for an optical switch that is based on a photonic technology. Such a photonic switch is expensive and typically introduces a significant attenuation to the optical signals. Additionally, the wavelengths of the optical signals that can be connected between the two optical networks are predetermined, as they are dependent on the wavelengths at which transmissions can be added and/or dropped at OADMs 212, 214, 216 and 218.

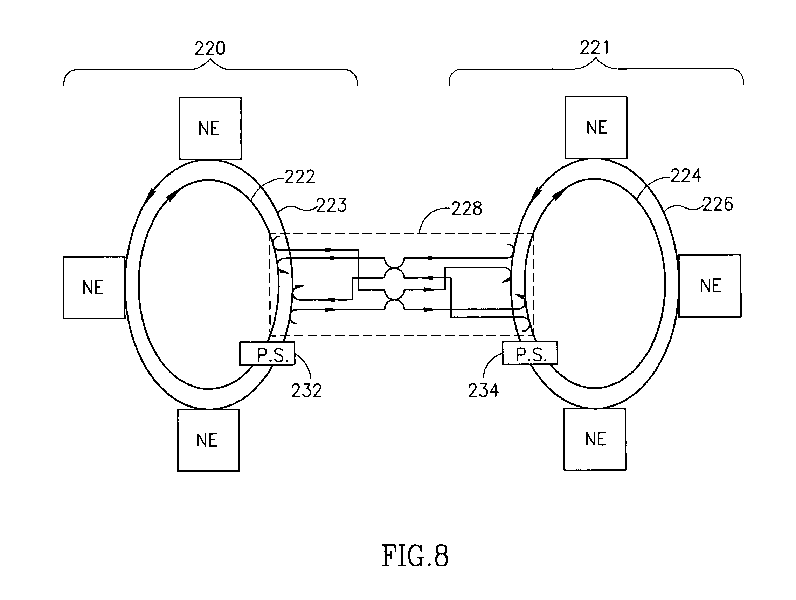

The present invention provides another network configuration, as illustrated in Fig. 8, for connecting such two optical networks. Optical network 220 comprises two optical fibers 222 and 223 and a plurality of network elements. The other network 221, comprises optical fibers 224 and 226 and a number of network elements. The two optical networks further comprise each a protection switch 232 and 234 respectively, and are interconnected via optical coupler array 228. The transmission of optical signals between network elements that belong to the same optical network is similar to that described in conjunction with Fig. 3. Also, protection switches 232 and 234 are operative as described in conjunction with protection switch 146 in Fig.5. The optical coupler array 228 shown in Fig. 8 is operative to transmit optical signals from the first optical network to the second one and vice versa. As described in conjunction with Fig. 3, the pairs of optical fibers 222 and 223 of network 220 and fibers 224 and 226 of network 221 are used to provide protected transmission of traffic and to provide an adequate solution in case of a fiber cut in any location in each network. As described above, in a case of a fiber cut any optical signal may appear only on one of the two fibers of an optical ring. Therefore optical coupler array 228 is capable of transferring optical signals from optical fiber 222 to both optical fibers 224 and 226, and is also capable of transferring optical signals from optical fiber 223 to both optical fibers 224 and 226. Similarly, the optical coupler array 228 is operative in the other direction *mutates mutandis.*

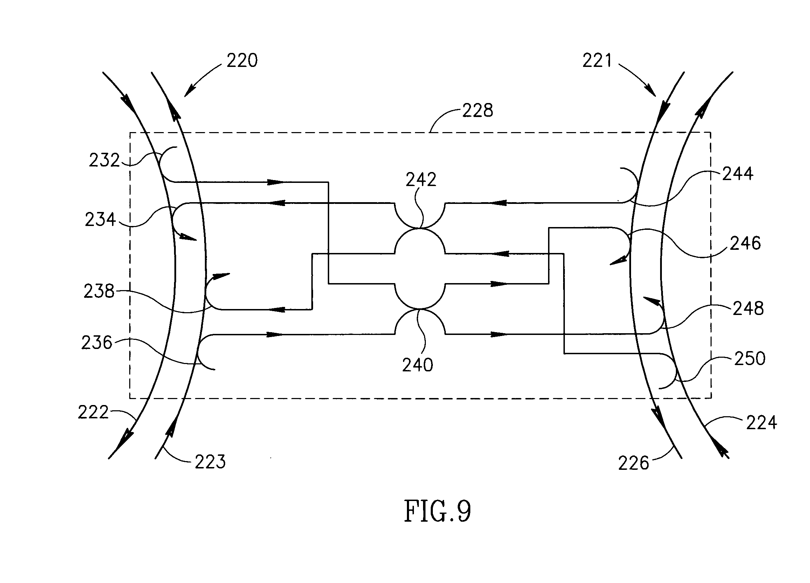

Fig. 9 further illustrates the optical coupler array 228. When an optical signal transmitted along optical fiber 223 arrives at optical coupler 236, it is splitted to produce two similar optical signals, preferably at a substantially equal intensity. A first optical signal is forwarded along fiber 223 towards optical coupler 238 while the other is transferred to optical coupler 240. Similarly, when an optical signal is transmitted along optical fiber 222, it would arrive at optical coupler 232, and be splitted to produce two similar optical signals, preferably at a substantially equal intensity. A first optical signal would be forwarded along fiber 222, towards optical coupler 234 while the other be transferred to optical coupler 240. It should be appreciated that under normal operating conditions, protection switch 232 (shown in Fig. 8) is open so that the optical signals arriving from the various network elements that belong to network 220, arrive at the optical coupler array 228 only via optical fiber 222. However, if optical fibers 222 and 223 are cut, protection switch 232 is closed and each of the optical signals arriving from the various network elements that belong to network 220, arrive at optical coupler array 228 via optical fiber 222 or via optical fiber 223, depending on the location of the fiber cut. Preferably, there should be no situation where the optical signals transmitted in network 220 arrive at optical coupler array 228 simultaneously from both optical fibers 220 and 222. The combined output of optical coupler 240 is splitted to produce two similar optical signals, preferably at a substantially equal intensity. One of the two optical signals egressing optical coupler 240 is forwarded towards optical fiber 226 of network 221 via optical coupler 246, while the other optical signal is forwarded to optical fiber 224 via optical coupler 248.

Similarly, in the opposite direction, when an optical signal transmitted along optical fiber 224 arrives at optical coupler 250, it is splitted to produce two similar optical signals, preferably at a substantially equal intensity. A first optical signal is forwarded along fiber 224 towards optical coupler 248 while the other is transferred to optical coupler 242. Similarly, if an optical signal is transmitted along optical fiber 226, it would arrive at optical coupler 244, and be splitted to produce two similar optical signals, preferably at a substantially equal intensity. A first optical signal would be forwarded along fiber 226, towards optical coupler 246 while the other be transferred to optical coupler 242. It should be appreciated that under normal operating conditions, protection switch 234 (shown in Fig. 8) is open so that the optical signals arriving from the various network elements that belong to network 221, arrive at the optical coupler array 228 only via optical fiber 224. However, when optical fibers 224 and 226 are cut, protection switch 234 is closed and each of the optical signals arriving from the various network elements that belong to network 221, arrive at the optical coupler array 228 via optical fiber 224 or via optical fiber 226, depending on the location of the fiber cut. Preferably, there should be no situation where the optical signals transmitted in network 221 arrive at optical coupler array 228 simultaneously from both optical fibers 224 and 226. The combined output of optical coupler 242 is splitted to produce two similar optical signals, preferably at a substantially equal intensity. One of the two optical signals egressing optical coupler 242 is forwarded towards optical fiber 222 of network 221 via optical coupler 234, while the other optical signal is forwarded to optical fiber 223 via optical coupler 238.

It should be appreciated that optical coupler array 228 is not selective, i.e. it transfers all optical signals, irrespective of their wavelength. Therefore any optical wavelength that is used for communication between the various network elements within the optical network 220 preferably should not be used for communication between the various elements of optical network 221, nor for communication between elements belonging to the two optical networks.

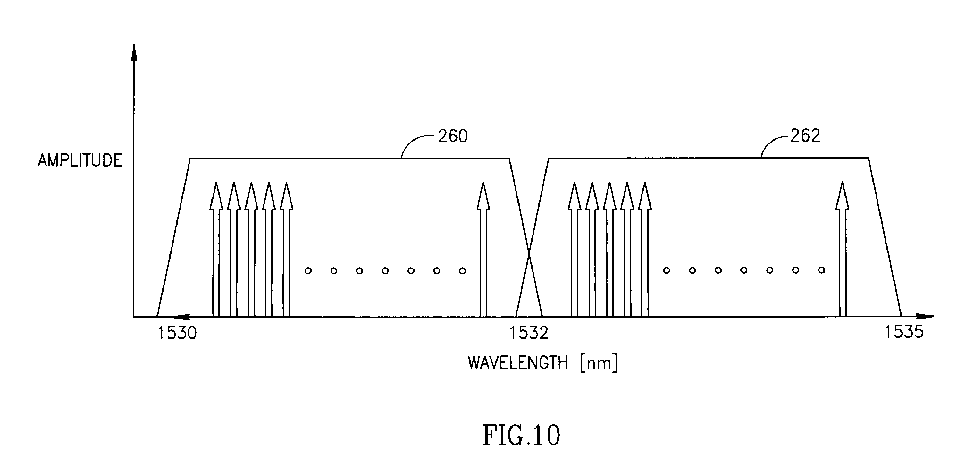

In order to enable an easier and more cost-effective method of transmission of optical signals within optical networks and between elements belonging to different networks, it is preferred to divide the available optical wavelengths into at least two groups, each comprising a plurality of wavelengths (e.g. wavelength group 260 and wavelength group 262 as exemplified in Fig.10). In this embodiment, wavelength group 260 is dedicated for transmission of optical signals to and from network elements belonging to the same optical network (intra-network traffic), while wavelength group 262 is dedicated for transmission of optical signals that are destined to elements that belong to one or more different networks (inter-network traffic). In the example presented in Fig. 10, the wavelengths of group 260 are in the range of 1530 - 1532 nm and the wavelengths of group 262 are in the range of 1532 - 1535 nm. This arrangement enables easy differentiation between the two groups by appropriate optical filters and also enables the use of wavelengths that are reserved for the intra-network traffic (wavelength group 260) in each of the networks, irrespective of whether such wavelength is used within another network, as no transmission at such a wavelength shall leave that network. It should also be understood that the wavelength range of each of such wavelength groups (260 and 262) could be selected to match the specific communication requirements (i.e. the number of wavelengths required per each group). As mentioned above, the different groups according to the present invention are not restricted to comprise continuous range of wavelengths, but in the two groups example discussed, wavelength group 260 and/or 262 may comprise a plurality of specific pre-defined wavelengths.

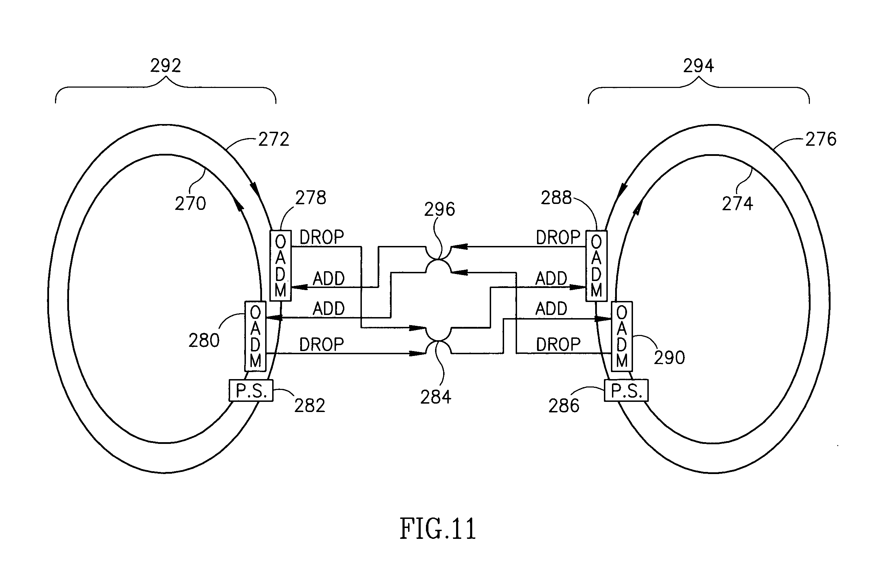

Fig. 11 illustrates two optical networks each comprising two optical rings, in a similar configuration to the one illustrated in Fig. 8. However, one important difference between these two configurations is that the connection between the two optical networks in Fig. 11 comprises wavelength selective OADMs 278, 280, 288 and 290, as opposed to the optical coupler array 228 of the Fig. 8 network configuration. OADMs 278, 280, 288 and 290 are operative to selectively add and drop optical wavelength group 262 that is reserved for the inter-network traffic, and to allow transparent and uninterrupted passage therethrough of optical signals that do not belong to wavelength group 262, including optical wavelength group 260. Naturally, OADMs 278, 280, 288 and 290 may be designed to allow uninterrupted passage of optical signals transmitted at a wavelength that belong to group 260, while performing "add and drop" activities for all optical signals transmitted at a wavelength that does not belong to group 260. Therefore any wavelength that is used within network 292, i.e. for communication between the elements that belong to network 292, can safely be used within network 294, i.e. for communication between the elements that belong to network 294.

When one of the network elements of network 292 is required to transmit an optical signal destined to a network element of network 294 that optical signal shall be transmitted at a wavelength selected from among the plurality of wavelengths comprising group 262. As previously explained, OADMs 278 and 280 are operative to selectively drop optical signals arriving on optical fibers 272 and 270, respectively, which are transmitted at a wavelength of group 262. Any optical signal transmitted at a wavelength that belongs to group 262 is transferred to the "drop" output of each OADM, while other optical signal transmitted at wavelengths that do not belong to that group pass transparently via each of these OADMs. Under normal operating conditions, optical signals transmitted by a network element that belongs to network 292 at a group 262's wavelength arrive along optical fiber 272 and pass through OADM 278 to optical coupler 284. The output of optical coupler 284 is splitted into two optical signals. One is coupled to the "add" input of OADM 288 while the other optical signal is coupled to the "add" input of OADM 290. The optical signals at the "add" input of OADMs 288 and 290 are coupled to optical fibers 276 and 274, respectively, ensuring that optical signals transmitted by a network element of network 292 at a wavelength selected among the group 262 wavelengths are transmitted to the appropriate network element of network 294.

Each of networks 292 and 294 is provided with a protection switch, 282 and 286, respectively. The structure and operation of these protection switches are substantially similar to those described in conjunction with protection switch 146 in Fig.5. Under normal operating conditions, protection switches 282 and 288 are operative not only to block in each of networks 292 and 294 the propagation of signals conveyed at a wavelength that belongs to group 260, but also to prevent signals transmitted from network 292 (or from network 294) to the other network at a wavelength that belongs to group 262, from returning back to originating network. When optical fiber 272 is cut, protection switch 286 will close to establish an optical protection path along network 294. Similarly, when optical fiber 274 is cut, protection switch 282 will close to establish an optical protection path along network 292. Once protection switch 286 is closed, a protection path along optical fiber 270 is established, allowing forwarding of optical signals via OADM 280 to optical coupler 284. Optical signals that arrive at OADM 278 along optical fiber 272 shall be combined at optical coupler 284 with optical signals transmitted along optical fiber 270 via OADM 280, thus providing protection in the case of a fiber cut, independent of the location of the cut. In a similar manner optical signals may be transmitted from network 294 (via OADMs 288 and 290 and optical coupler 296) to network 292.

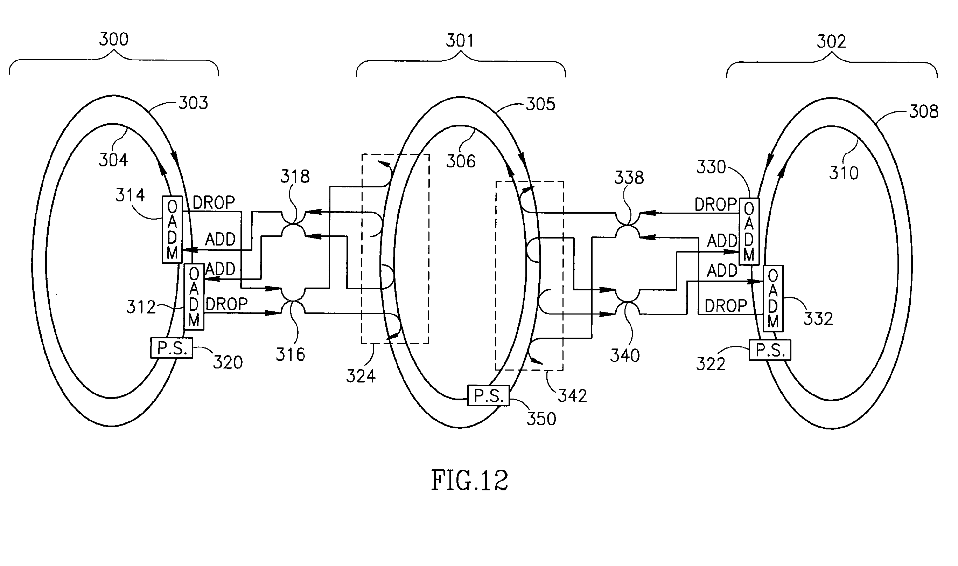

Fig. 12 describes an embodiment of the present invention that concerns the interoperability of a plurality of optical networks (three double fiber ring networks in this example). The three networks 300, 301 and 302 comprising the optical fiber pairs 303 and 304, 305 and 306, and 308 and 310, respectively. Similarly to Fig.11 the network elements that are associated with these networks, are not shown in Fig 12. Again, similarly to the previous example shown in Fig. 11, the intra-network communication between elements that belong to the same network is done by transmitting optical signals that are selected from a group of a first plurality of wavelengths, group 260, while inter-network communication between elements associated with different network(s) is done by transmitting optical signals at wavelengths selected from a group of a second plurality of wavelengths, group 262. Similarly to the network described in connection with Fig. 11, OADMs 312 and 314 are operative to transfer optical signals to and from network 300 that are transmitted at a group 262's wavelength, while OADMs 330 and 332 are operative to transfer optical signals to and from network 302 that also transmitted at a group 262's wavelength. Protection switches 320 and 322 are operative to provide an optical protection path in networks 300 and 302 respectively, in a similar way to the one described in connection with the network configuration illustrated in Fig. 11. Under normal operating conditions, protection switches 320 and 322 are operative not only to block the propagation of signals conveyed at a wavelength that belongs to group 260 in each of networks 300 and 302, but also to prevent signals at a wavelength that belongs to group 262 and transmitted to network 300 or to network 302 from returning back to the originating network. Similarly to the architecture shown in Fig. 11, optical couplers 316 and 318 are operative to transfer optical signals to and from network 300 and provide an optical protection path in the case of fiber cut in that network, while optical couplers 338 and 340 are operative to transfer optical signals to and from network 302 and provide an optical protection path in the case of fiber cut in network 302. Optical coupler array 324 is operative to couple optical signals transmitted to and from optical fibers 305 and 306 (network 301) and forward them towards network 300 via optical couplers 316 and 318. Optical coupler array 342 is operative to couple optical signals transmitted to and from optical fibers 305 and 306 (network 301) and forward them towards network 302 via optical couplers 338 and 340. In this configuration, any optical signal that is transmitted along network is transferred via optical coupler arrays 324 and 342 towards both networks 300 and 302. When a signal is transmitted from, for example, a network element in network 301, at a wavelength that belongs to wavelength group 260(reserved for intra-network traffic) it reaches both networks 300 and 302 but is blocked at the corresponding OADMs which are adapted to allow the transfer of signals at wavelengths which belong to wavelength group 262. Let us now consider an example where an optical signal transmitted at network 300 at a group 262's wavelength and is destined to a network element located in network 302. Such an optical signal will pass through: OADM 312 or 314, optical coupler 316 and optical coupler array 324 and arrive to network 301. After passing along network 301, this optical signal will pass through optical coupler array 342, optical coupler 340 and OADM 330 or 332, and finally reach network 302 where it will be forwarded to its destination.

As shown in Fig. 12, network 301 also comprises protection switch (350), which operates in a similar to that by which the protection switches 146,232,234,282 and 286 previously described.

It should be appreciated that in several optical networks a need to amplify the optical signals as a result of extensive attenuation by the optical fibers and the optical coupling devices may arise. The most popular optical amplifiers that are suitable for this purpose are EDFA - Erbium Doped Fiber Amplifiers. These amplifiers are widely used and can provide a typical gain of more than 25dB. Since all the optical paths in the networks described in Figs. 3, 8, 11 and 12 are unidirectional, it is easy to introduce optical amplifiers in any location at the network, as may be required.

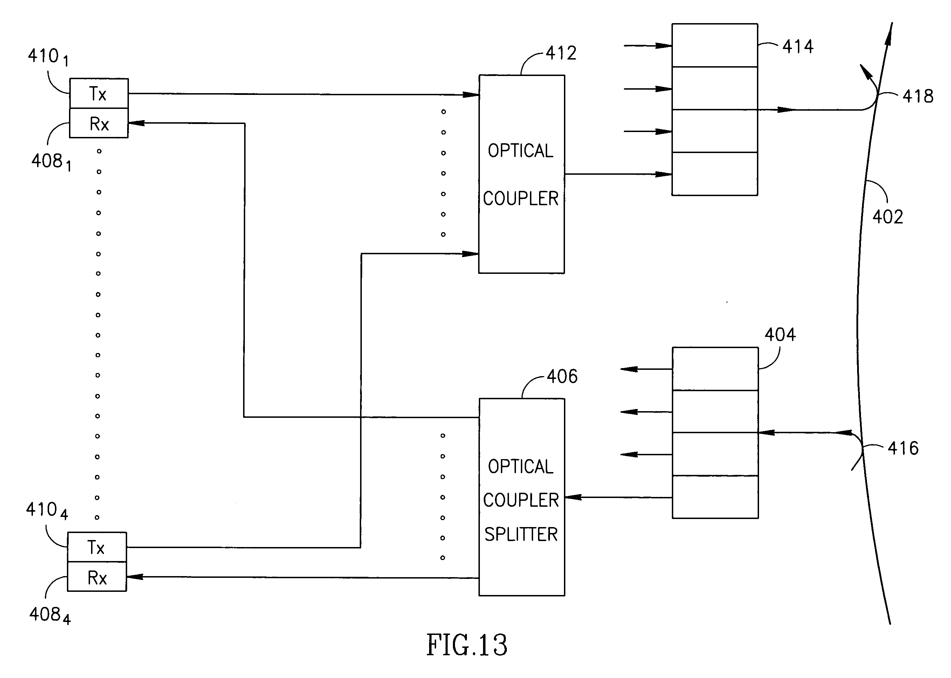

As described above in conjunction with Figs. 3, 8,11 and 12, one of the advantages of the networks described in these Figs. is, that the nodes comprised therein are coupled to the optical fibers via non-selective optical couplers, i.e. couplers that are operative to deliver the signals received irrespective of their wavelength. This feature enables a significant degree of flexibility in the operation of each node in the network. However, the main disadvantage of this configuration is that the optical signal is significantly attenuated on its path from the optical fiber to each optical transmitter and to each optical receiver. The more optical transmitters and optical receivers, the higher the optical signal attenuation is, since the optical signal energy is split to more directions. A solution directed to overcome this problem is described in Fig. 13.

For the sake of clarity, the terminal configuration is shown in Fig. 13 with respect to only one fiber. However, it should be clearly understood by a skilled man in the art that such a terminal as described below, can be configured to operate with two fibers, as illustrated, for example in Fig. 4. When an optical signal transmitted along fiber 402 arrives at passive optical coupler 416, part of the optical energy is forwarded to filter array 404 while the rest remains with the optical signal that is conveyed onward along fiber 402. The function of filter array 404 is to selectively split the optical signal at its input into several sub-ranges, (in this example, four frequency sub-ranges). The width of each sub-range was set in this example to 200 GHz. One output of filter array 404 is coupled via optical coupler/splitter to the input of optical receivers 408₁ through 408₄. In the other direction, the output of optical transmitters 410₁ through 410₄ is coupled via optical coupler 412 to an input of filter array 414. Similarly to filter array 404, filter array 414 is operative to selectively combine several sub-ranges, (in this example, four frequency sub-ranges). The output of filter array is coupled to optical fiber 402 via optical coupler 418. Optical transmitters/receivers can be tunable over the range of the sub-range of the corresponding port of filter arrays 404 and 414. When more than 4 optical transmitters/receivers are required in that terminal, additional ports of filter arrays 404 and 414 can be applied. In this example a maximum of 16 optical transmitters/receivers can be implemented in the network element. The main advantage of this network element configuration is a much lower signal attenuation for the case of a large number of optical transmitters and receivers in the network element. For example, for 16 optical transmitters/receivers the signal attenuation from optical coupler 416 to the input of each optical receiver is typically less than 9dB as opposed to typically 14dB in the configuration described in Fig.4. Another advantage of this network element configuration is its modularity and scalability. If we consider an example that a network element was configured initially for 4 optical transmitters/receivers, and an expansion is required, more optical transmitters/receivers may be easily added, without affecting the traffic transmitted along the operating channels, by simply using available ports at filter arrays 404 and 414.

The present invention has been described using non-limiting detailed descriptions of embodiments thereof that are provided by way of example and are not intended to limit the scope of the invention. It should be understood that features and/or steps described with respect to one embodiment may be used with other embodiments and that not all embodiments of the invention have all of the features and/or steps shown in a particular figure or described with respect to one of the embodiments. Variations of embodiments described will occur to persons of the art.
It is noted that some of the above described embodiments describe the best mode contemplated by the inventors and therefore include structure, acts or details of structures and acts that may not be essential to the invention and which are described as examples. Structure and acts described herein are replaceable by equivalents, which perform the same function, even if the structure or acts are different, as known in the art. Therefore, the scope of the invention is limited only by the elements and limitations as used in the claims. When used in the following claims, the terms "comprise", "include", "have" and their conjugates mean "including but not limited to".

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An optical communication system comprising:
a first plurality of optical transmitters;
at least one wavelength division multiplexer, adapted to multiplex optical signals transmitted at different wavelengths to obtain a multiplexed optical signal;
at least one dropping/adding unit adapted to be provided with said multiplexed optical signal transmitted along a first transmission path and divert a first portion thereof to a second transmission path, wherein said first portion comprises substantially the entire spectrum of said multiplexed optical signal and forwarding a second portion of said multiplexed optical signal along said first transmission path; and
at least one optical receiver, adapted to receive said first portion of the multiplexed optical signal diverted to said second transmission path.

2. An optical communication system according to claim 1, further comprising at least one filtering means adapted to divide said first portion of the multiplexed optical signal diverted by said at least one dropping/adding unit, into at least two parts, each comprising a wavelength range substantially different than the other's, and forwarding at least one of said two parts towards said at least one optical receiver.

3. An optical communication system according to claim 1 and comprising a plurality of optical receivers, wherein each of said plurality of optical receivers is adapted to operate at a wavelength belonging to the wavelength range of said part of the diverted first portion of the multiplexed optical signal.

4. An optical communication system according to any one of claims 1 to 3, wherein said at least one dropping/adding unit comprises at least one optical coupler.

5. An optical communication system according to any of claims 1 to 4, wherein said second portion of the multiplexed optical signal is substantially equal to an optical signal having the energy of the original multiplexed optical signal less that of the first portion of the multiplexed optical signal, and a wavelength range of said second portion of the multiplexed optical signal is substantially equal to that of the original multiplexed optical signal.

6. An optical communication system according to claim 1, wherein at least one of said first plurality of optical transmitters comprises at least one tunable optical transmitter capable of operating at a first plurality of wavelengths;
at least one first optical coupler adapted to couple said at least one tunable optical transmitter to said at first transmission path and at least one second coupler adapted to couple said at least one optical receiver to said first transmission;
wherein said at least one first optical coupler is adapted to allow transmission of optical signals from said tunable optical transmitter irrespective of their wavelength and combining them with other optical signals transmitted along said second transmission path, passing through said optical coupler; and
wherein the optical signals transmitted by said tunable optical transmitter, are transmitted at a wavelength corresponding to a wavelength at which said at least one optical receiver is operative.

7. An optical communication system according to any one of the preceding claims wherein each of said first and second transmission paths is further connected to an optical protection switch adapted to block under normal operating conditions the transmission of optical signals ingressing said optical protection switch, and to allow transmission of optical signals through said optical protection switch in response to a fault occurring along said corresponding transmission path.

8. An optical communication system according to claim 7, further comprising means to detect a fault along said at least one optical path and activate said optical protection switch in response to a fault detection.

9. An optical communication system adapted for transmitting and receiving of optical signals over at least two optical networks, wherein a first of said optical networks comprises a plurality of network elements and wherein a second of said optical networks comprises at least one network element, said network elements comprise at least one tunable optical transmitter and at least one optical receiver,
wherein said at least one tunable optical transmitter associated with said first optical network is adapted to transmit an optical signal destined to another network element belonging to said first optical network at a wavelength selected from among a first plurality of wavelengths, and to transmit an optical signal destined to a network element belonging to another optical network at a wavelength selected from among a second plurality of wavelengths,
**characterized in that** no wavelength included in said first plurality of wavelengths is included in said second plurality of wavelengths, and at least said first optical network further comprises at least one optical coupling device operative to allow transfer of an optical signal transmitted at a wavelength selected from among said second plurality of wavelengths, and to block the transfer of an optical signal transmitted at a wavelength selected from among said first plurality of wavelengths from being transmitted to a location that is not included in said first optical network.

10. An optical communication system according to claim 9, wherein said optical signal transmitted at a wavelength selected from among a first plurality of wavelengths is transmitted by a first optical transmitter and wherein said optical signal transmitted at a wavelength selected from among a second plurality of wavelengths is transmitted by a second optical transmitter, whereby said first and second optical transmitters replace said at least one tunable optical transmitter.

11. An optical communication system according to claim 9, wherein at least two of the optical networks other than said first optical network further comprise OADMs that allow addition and drop of optical signal received thereby which are transmitted at predetermined wavelengths selected from said second plurality of wavelengths.

12. An optical communication system according to any one of claims 9 to 11, wherein at least one of said first and second pluralities of wavelengths comprises a continuous range of wavelengths.

13. An optical communication apparatus comprising a dropping/adding unit connected to a transmission path where a wavelength division multiplexed optical signal is transmitted, and being capable of:
dropping an optical signal having a first portion of the energy of said wavelength division multiplexed optical signal transmitted on said transmission path wherein said first portion comprises substantially the entire spectrum of said optical signal;
forwarding the remaining of said wavelength division multiplexed optical signal along said transmission path;
adding an optical signal transmitted at at least one wavelength to said forwarded optical signal along said transmission path,
and wherein said optical communication apparatus is adapted to forward said first portion of said wavelength division multiplexed optical signal towards at least one optical receiver.

14. An optical communication apparatus according to claim 13, further comprising optical filtering means adapted to divide said first portion of said wavelength division multiplexed optical signal into at least two substantially different portions thereof.

15. An optical communication apparatus according to claim 14, wherein said optical filtering means is adapted to forward at least one of the two portions to said at least one optical receiver.

16. A method for transmitting an optical signal in an optical communication network comprising a plurality of network elements, said method comprises the steps of:
a. providing a first network element that comprises at least one tunable optical transmitter capable of operating at a plurality of wavelengths;
b. providing a second network element that comprises at least one optical receiver operative at a first wavelength included among said plurality of wavelengths;
c. providing an optical coupler adapted to couple the output of said at least one tunable optical transmitter to an optical transmission path extending between said first and second network elements, adapted to forward transmission of optical signals transmitted by said at least one tunable optical transmitter irrespective of their wavelength and combine them with other optical signals transmitted along said optical transmission path;
d. tuning said at least one tunable optical transmitter so that a transmission destined to said second network element be transmitted at said first wavelength; and
e. transmitting an optical signal from said at least one tunable optical transmitter via said optical coupler and along said optical transmission path.

17. A method for transmitting optical signals in a system comprising at least a first and a second communication networks wherein said method comprises the steps of:
i. providing a first network element associated with said first communication network which comprises at least one optical transmitter;
ii. transmitting optical signals by said at least one optical transmitter, wherein optical signals are transmitted at a first wavelength selected from a first group of wavelengths consisting of a first plurality of wavelengths if said optical signals are destined to another network element associated with said first communication network, and wherein optical signals are transmitted at a second wavelength selected from a second group of wavelengths consisting of a second plurality of wavelengths when said optical signals are destined to another network element not associated with said first communication network, and no wavelength being a member of the first group of wavelengths is a member of said second group of wavelengths;
iii. allowing transfer of the optical signals from said first communication network to said second communication network if their wavelength is a wavelength being a member of the second group of wavelengths and preventing the transfer of the optical signals from said first communication network to said second communication network if their wavelength is a wavelength being a member of the second group wavelengths.

18. A method of forwarding an optical signal in an optical communication network which comprises the steps of:
(i) receiving a multiplexed optical signal comprising a plurality of multiplexed optical signals transmitted at different wavelengths, all of which comprise a wavelength range characterizing said multiplexed optical signal;
(ii) forwarding a first portion of said multiplexed optical signal towards at least one optical receiver, wherein the wavelength range of said first portion is substantially equivalent to the entire wavelength range of said multiplexed optical signal;
(iii) forwarding the remaining of said multiplexed optical signal along a transmission path in said optical network.

19. A method according to claim 18, further comprising the steps of:
a. dividing said first portion of said multiplexed optical signal into a plurality of optical signals, each being at a substantially different wavelength range than the others;
b. forwarding at least one of said divided optical signals towards at least one optical receiver operative at a wavelength belonging to the wavelength range of said divided optical signal.
